Europäisches Patentamt

**European Patent Office**

Office européen des brevets

(11) Veröffentlichungsnummer: **0 158 294**
A2

## (12) EUROPÄISCHE PATENTANMELDUNG

(21) Anmeldenummer: **85104151.7**

(51) Int. Cl.⁴: **H 04 M 1/65**

(22) Anmeldetag: **04.04.85**

(30) Priorität: **06.04.84 DE 3413075**

(43) Veröffentlichungstag der Anmeldung:
**16.10.85 Patentblatt 85/42**

(84) Benannte Vertragsstaaten:
**AT BE CH DE FR GB IT LI NL SE**

(71) Anmelder: **Compur-Electronic GmbH**
**Steinerstrasse 15**
**D-8000 München 70(DE)**

(72) Erfinder: **Schwarz, Gerhard**
**Schaffhauserstrasse 12**
**D-8000 München 71(DE)**

(72) Erfinder: **Lutz, Walter**
**Johanneskirchner Strasse 16**
**D-8043 Unterföhring(DE)**

(74) Vertreter: **Geyer, Ulrich F., Dr. Dipl.-Phys.**
**Steinerstrasse 15**
**D-8000 München 70(DE)**

(54) **Telefonanrufbeantworter.**

(57) Der Telefon-Anrufbeantworter weist Bedienungsschalter in Form einer Folientastatur auf. Um mehr Schaltfunktionen vorsehen zu können als Schalttasten vorhanden sind, und um dem Benutzer eine einfache, betriebssichere und übersichtliche Bedienung zur ermöglichen, sind Bedienerfolien vorgesehen, die jeweils für eine bestimmte Bedienungsfunktion auf das Tastenfeld aufgelegt werden.

FIG.1

EP 0 158 294 A2

COMPUR-ELECTRONIC GmbH          München, den ·3. April 1985
Steinerstraße 15
8000 München 70

## Telefon-Anrufbeantworter

Die Erfindung betrifft einen Telefon-Anrufbeantworter mit
Bedienungsschaltern auf einem Tasten-Bedienungsfeld.

Heutige Anrufbeantworter haben außerordentlich vielseitige
und vielfältige Funktionen und Möglichkeiten. Neben der eigentlichen Anrufbeantwortung und einer Gesprächsaufzeichnung
besitzen moderne Anrufbeantworter weitere Leistungsfunktionen wie Fernabfrage, Fernrepetition, Fernlöschung, Ferntextwechsel, Fernkontrollruf, die Weiterleitung eingehender
Telefongespräche an verschiedene weitere Telefonnummern,
die Fernbedienung mittels eines Code-Senders mit selbstwählbaren Code-Kombinationen , Fernwirkeinrichtungen, etwa
für die Überwachung, Steuerung und Alarmmeldung von Maschinen, Rechenanlagen, Bewässerungs-, Gas-, Wasser- und Fernwärmeversorgungssystemen, Prozessoranlagen usw., Eurosignal-
Systeme , Diktier- und Wiedergabefunktionen usw. Mehrere
oder alle diese Leistungsfunktionen können dabei in einem
einzigen Anrufbeantwortergerät vorgesehen sein. Bei dieser
Vielzahl von Funktionen ist jedoch auch die Bedienung des
Geräts für den Benutzer, der normalerweise keine technischen
Vorkenntnisse hat, äuserst kompliziert, da eine Vielzahl von
Bedienungsschaltern für die jeweiligen Funktionen betätigt
werden müssen. Beispielsweise müssen verschiedene Funktionstasten in einer bestimmten Reihenfolge nacheinander gedrückt
werden, wie dies etwa bei der Eingabe der Code-Nummer für die

Fernabfrage, bei der Eingabe der Telefonnummern, an die der Ruf weitergeleitet werden soll, bei der Aufzeichnung des oder mehrerer Ansaugetexte usw. der Fall ist.

Im Hinblick auf die sehr zahlreichen Funktionen und Bedienungsmöglichkeiten sind darüber hinaus auch sehr viele Bedienungsschalter erforderlich, die die Übersichtlichkeit und fehlerfrei Bedienung des Geräts erheblich beeinträchtigen.

Der Erfindung liegt daher die Aufgabe zugrunde, einen Telefon-Anrufbeantworter zu schaffen, der trotz einer Vielzahl von Leistungsfunktionen und Bedienungsmöglichkeiten auch für den technisch nicht versierten Benutzer leicht, sicher und ohne Fehlfunktionen zu bedienen ist.

Diese Aufgabe wird erfindungsgemäß mit den kennzeichnenden Merkmalen des Anspruchs 1 gelöst.

Durch die Bedienerfolien gemäß der Erfindung, die eine Bedienerschablone für die Führung des Benutzers bei der Bedienung darstellen, werden jeweils nur bestimmte Tastenschalter der Folientastatur bezeichnet, die für die Ausführung der Bedienung einer bestimmten Funktion erforderlich sind. Alle übrigen Taste bleiben für den Benutzer leer bzw. unbeschriftet, so daß er nur die Angaben des Tastenfeldes bzw. der Tasten vor sich hat, die er zu einer bestimmten Funktionsbedienung benötigt. Der Bediener kann auf diese Weise eine bestimmte Funktion des Geräts bedienen, ohne durch andere Funktionen oder Tasten für andere Funktionen irritiert zu werden. Dadurch sind Fehlbedienungen des Benutzers weitgehend ausgeschaltet.

Wenn der Benutzer eine bestimmte Bedienungsfunktion, z. B. das Eingeben des Codes für den Code-Sender ausgeführt hat, kann er die für das Eingeben des Codes vorgesehene Bedienerfolie von der Folientastatur abnehmen und eine andere Bedienerfolie beispielsweise die Bedienerfolie für das Aufsprechen des Ansagetextes auf die Folientastatur auflegen. Dann hat er auf Grund
dieser neuen Bedienerfolie nur noch die Tasten vor sich, die
zum Aufsprechen der Ansage erforderlich sind. Die Bedienung
des Anrufbeantworters mit vielen Funktionen ist daher mit
den erfindungsgemäßen Merkmalen denkbar einfach.

Ein weiterer wesentlicher Vorteil besteht auch darin, daß bei
aufgelegter Bedienerfolie nur die Folientasten für den Benutzer scheinbar vorhanden sind, die er für eine bestimmte
Bedienung benötigt. Alle übrigen Folientasten sind abgedeckt.

Durch die erfindungsgemäßen Bedienerfolien ergibt sich weiterhin der wesentliche Vorteil, daß man mit erheblich weniger
Tastenschaltern für die verschiedenen Bedienungsfunktionen auskommt, als dies sonst erforderlich ist. Durch kombiniertes
bzw. in einer bestimmten Reihenfolge vorgenommenes Betätigen
von zwei oder mehr Funktionstasten kann man jeder einzelnen
Funktionstaste mehrere Schaltfunktionen zuordnen. Dadurch
läst sich die Gesamtanzahl der Funktionstasten erheblich verringern.

Die Bedienerfolien sind aus einem elastischen Material hergestellt, so daß sie bei Druck mit der Fingerspitze diesen auf
die eigentliche Folientastatur übertragen und der Schaltvorgang dadurch ausgelöst werden kann. Gemäß einer bevorzugten
Ausführungsform der Erfindung ist die Bedienerfolie lediglich
an den Stellen, an denen eine Tastenschaltung vorgenommen werden soll, elastisch, an den anderen Stellen jedoch unelastisch.
Dadurch kann nochmals die Sicherheit der Bedienung erhöht
werden, da auch dann keine Tasten der Tastatur betätigt werden,
wenn die Bedienerfolie an Stellen berührt bzw. getastet wird,
die für die bestimmte Bedienerfolie keine Tastenfunktion besitzt bzw. besitzen soll.

Gemäß einer bevorzugten Ausführungsform der Erfindung können
die Bedienerfolien Ausnehmungen an den Stellen der Tastatur

bzw. des Bedienungsfeldes aufweisen, wo sich der Lautsprecher, das Mikrophon oder sonstige Teile oder Einrichtungen befinden, die nicht abgedeckt werden sollen.

Die Bedienerfolien haften vorzugsweise adhäsiv auf der Folientastatur an, so daß sie fest aufliegen und nicht verrutschen, aber dennoch leicht abgenommen und ausgewechselt werden können. Vorzugsweise ist um die Folientastatur herum ein Rahmen vorgesehen, der gering von der Folientastatur absteht, so daß die Bedienerfolien, die hinsichtlich ihrer Außenabmessungen den Innenabmessungen des Rahmens entsprechen, eine definierte Lage auf dem Tastenfeld haben.

Gemäß einer weiteren sehr vorteilhaften Ausgestaltung der Erfindung sind die Bedienerfolien mit kurzen, übersichtlichen Anleitungen zum Betätigen der auf einer Bedienerfolie jeweilig angegebenen Tasten bzw. Tastenfunktionen versehen. Dadurch wird die Bedienungssicherheit weiter erhöht.

Die Erfindung wird nachstehend anhand der Zeichnungen beispielsweise näher erläuter. Es zeigen:

Fig. 1 das Ausführungsbeispiel eines Anrufbeantworters in Aufsicht mit dem Bedienungsfeld,

Fig. 2 eine Vorderansicht des in Fig. 1 dargestellten Geräts,

Fig. 3 eine Seitenansicht des in Fig. 1 und 2 dargestellten Geräts,

Fig. 4 eine Bedienerfolie für die Eingabe einer Code-Zahl für die Fernabfrage,

Fig. 5 eine Bedienerfolie für das Aufsprechen des Ansagetextes,

Fig. 6 eine Bedienerfolie für das Eingeben der Uhrzeit und

Fig. 7 eine Bedienerfolie für das Eingeben von Rufnummern.

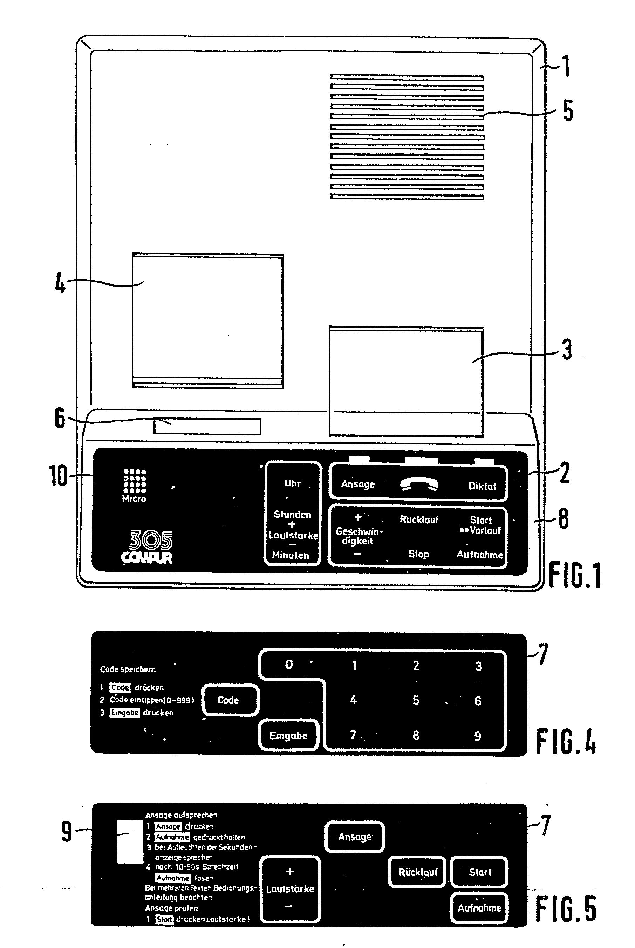

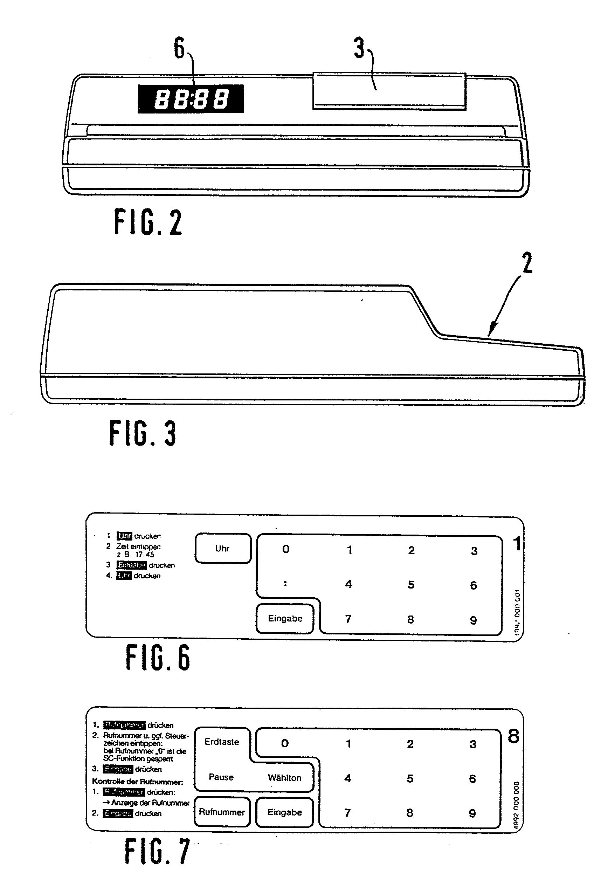

Die Fig. 1 bis 5 sind verkleinerte Darstellungen, während die Fig. 6 und 7 zwei Bedienerfolien in der Originalgröße wiedergeben.

Fig. 1 zeigt in Aufsicht einen Telefon-Anrufbeantworter 1
mit einem Tastenfeld bzw. einer Folientastatur 2, einem
Kassettenschacht 3 für eine Aufzeichnung-Magnetbandkassette,
einen Kassettenschacht 4 für eine Ansagekassette, einem
Lautsprecher 5 sowie einer Ziffernanzeige 6 für die Anzeige
der Uhrzeit, von Rufnummern usw.

In der Voderansicht gemäß Fig. 2 ist die Ziffernanzeige 6
und der Kassettenschacht 3 für die Aufzeichnungskassette
ersichtlich. In Fig. 3 wird durch den Pfeil auf die Lage
des Tastenfelds 2 Bezug genommen.

Das aus einer Folientastatur bestehende Tastenfeld 2 gemäß
Fig. 1 besitzt mehrere Tastenschalter, wie etwa für die
Uhr-Anzeige in Stunden und Minuten, für die Lautstärkeregelung des Lautsprechers, für die Ansage und Diktateinschaltung,
für die Band-Geschwindigkeitsänderung, für den Start, den
Vorlauf (der durch zweimaliges Betätigen der Taste "Start"
in Funktion gesetzt wird),den Rücklauf und die Aufnahme.
Weiterhin ist noch eine Taste "Stop" dargestellt.

An der linken oberen Ecke des Tastenfels 2 befinden sich
Durchbrechungen für das darunterliegende Mikrophon.

Das Tastenfeld 2 ist fest am Telefon-Anrufbeantworter angebracht und in der dargestellten Weise dauerhaft mit den
Schaltfunktionen beschriftet. Mit diesen Schaltfunktionen ist
das Tastenfeld 2 praktisch erschöpft. Wie schwer und unübersichtlich weitere Schaltfunktionen auf diesem Tastenfeld
werden, ist beispielsweise bereits daraus ersichtlich, daß
für den Vorlauf die Taste "Start" zweimal gedrückt werden muß.

In Fig. 4 ist nun das Beispiel für eine erfindungsgemäße Bedienerfolie (7) in Aufsicht dargestellt. Dieses Ausführungsbeispiel einer Bedienerfolie ist für die Schaltfunktion dargestellt, bei der ein bestimmter Code für die Fernabfrage in das Gerät eingegeben wird. Ein solcher Code ist auch in einem kleinen Code-Sender eingegeben und wird von diesem abgegeben, wenn der Benutzer von irgendeinem Telefon aus das mit dem Anrufbeantworter gekoppelte Telefon antelefoniert, um beispielsweise Nachrichten durch Fernabfrage abzurufen. Durch einen Code wird sichergestellt, daß nur derjenige die Fernabfrage durchführen kann, der diesen Code kennt bzw. in seinem Code-Sender gespeichert ist.

Wie aus Fig. 4 ersichtlich, sind bei diesem Beispiel für eine Bedienerfolie den einzelnen Tasten andere Bediener- bzw. Tastenfunktionen zugeordnet, als dies beim Tastenfeld gemäß Fig. 1 der Fall ist. Durch Drücken der zusätzlichen Code-Taste und nachfolgendes Eintippen eines bestimmten, vom Benutzer zu wählenden Code und dem darauf folgenden Drücken der Eingabe-Taste wird der Code in das Diktiergerät eingegeben. Das heißt, dadurch, daß eine zusätzliche Code-Taste zunächst gedrückt wird, haben die Tasten mit der Bezeichnung "O", "1" .. "9" eine andere Funktion bzw. Wirkung als dies beim Tastenfeld 2 gemäß Fig. 1 der Fall ist, wenn die Taste "Code" der Bedienerfolien 7 gemäß Fig. 4 nicht gedrückt ist. Ersichtlich ergibt sich auf diese Weise eine sehr übersichtliche, einfache und bedienungssichere Betätigung der verschiedensten Funktionen des Anrufbeantworters. Auf der linken Seite ist für den Benutzer in Stichworten angegeben, welche Tasten er in welcher Reihenfolge zu drücken hat, um den Code in das Gerät einzuspeichern.

Fig. 5 zeigt ein weiteres Beispiel für eine Bedienerfolie 7. In diesem Falle ist die Bedienerfolie im Zusammenhang mit dem Aufsprechen eines Ansagetextes vorgesehen. Hierbei sind für den Benutzer jeweils wiederum nur diejenigen Tastenfelder angegeben, die für diesen Bedienungsablauf, nämlich für das Aufsprechen der Ansage erforderlich sind. Wie aus Fig. 5 wiederum

0158294

ersichtlich ist, werden die einzelnen Folientasten gegenüber
dem Tastenfeld von Fig.1 und Fig. 4 wiederum für unterschiedliche Funktionen verwendet. Da zunächst die Taste "Ansage"
gedrückt wird, wird dadurch den übrigen mit Tastfunktionen
versehenen Tasten eine andere, für diese Bedienungsweise
spezifische Funktion gegeben.

In entsprechender Weise zeigt Fig. 6 in natürlicher Größe
eine Folientaste 7 im Zusammenhang mit der Eingabe einer Uhrzeit und Fig. 7 eine Folientaste im Zusammenhang mit der Eingabe von Rufnummern, die der Anrufbeantworter automatisch
anwählt, wenn ein Anruf eingegangen ist. In einem entsprechend
hochwertigen Telefon-Anrufbeantworter kann bzw. können nämlich
eine Rufnummer bzw. mehrere Rufnummern gespeichert werden.
Wenn ein Anruf kommt, wählt der Telefon-Anrufbeantworter die
eingespeicherte Rufnummer oder nacheinander die eingespeicherten Rufnummern an und verbindet den Anrufer mit der vom Anrufbeantworter angewählten Rufnummer, so daß der Anrufer gar
nicht merkt, daß der angerufene beispielsweise nicht im Büro,
sondern zu Hause.

Die Bedienerfolien, die als Bedienungsschablonenfür die Bedienerführung dienen, sind aus einem elastischen Folienmaterial
hergestellt und auf der Rückseite vorzugsweise glatt. Vorzugsweise ist das Tastenfeld bzw. die Folientastatur, die mit dem
Gerät fest verbunden ist, auf der Oberseite ebenfalls glatt,
so daß sich eine Adhäsionswirkung ergibt und die Bedienerfolie
nach Auflegen auf das Tastenfeld anhaftet. Dennoch läßt sich
die Bedienerfolie 7 leicht von der Folientastatur wieder abnehmen. Vorzugsweise weist die Folientastatur 2 des Telefon-Anrufbeantworters 1 einen Rahmen 8 auf, dessen Innenabmessungen den Außenabmessungen der Bedienerfolie 7 entspricht.
Bei Einlegen der Bedienerfolie in den Rahmen ergibt sich eine
definierte sichere Lage der Bedienerfolie 7.

Die Bedienerfolie kann auf der Rückseite weiterhin mit Anweisungen oder Hinweisen für den Benutzer versehen werden, so daß dieser sämtliche Anweisungen, die für die Bedienung des Anrufbeantworters benötigt werden, auf den Bedienerfolien findet. Dadurch wird für den Benutzer eine separate Bedienungsanleitung entbehrlich, die häufig nur schwer verständlich ist, nicht gelesen wird und dadurch zu Fehlfunktionen des Geräts führt.

Die Dicke der Folie beträgt vorzugsweise 0,2 bis 2 mm.

Die Erfindung wurde anhand von Ausführungsbeispielen erläutert. Dem Fachmann sind jedoch zahlreiche Ausgestaltungen und Abwandlungen möglich, ohne daß dadurch der Rahmen der Erfindung verlassen wird.

**0158294**

COMPUR ELECTRONIC GmbH
Steinerstraße 15
8000 München 70

München, den 3. April 1985

## Ansprüche

1. Telefon-Anrufbeantworter mit Bedienungsschaltern auf einem Tasten-Bedienungsfeld, dadurch g e k e n n z e i c h n e t, daß die Bedienungsschalter als Folientasten in Form einer Folientastatur (2) ausgebildet sind und zusätzlich auf die Folientastatur (2) auflegbare, nur Tastenangaben für bestimmte, zu bedienende Tastenschalter und keine Tastenangaben für die nicht zu bedienenden Tastenschalter aufweisende Bedienerfolien (7) vorgesehen sind.

2. Telefon-Anrufbeantworter nach Anspruch 1, dadurch g e k e n n z e i c h n e t , daß die Bedienerfolien (7) die nicht zu bedienenden Tastenschalter abdecken.

3. Telefon-Anrufbeantworter nach Anspruch 1 oder 2, dadurch g e k e n n z e i c h n e t , daß die Bedienerfolien (7) zum Schaltern der Tastenschalter bei aufgelegter Bedienerfolie elastisch sind.

4. Telefon-Anrufbeantworter nach einem der Ansprüche 1 bis 3, dadurch g e k e n n z e i c h n e t , daß die Bediener-folien (7) nur an den eine Tastenschaltung vorzunehmenden Stellen elastisch und an den tastenfreien Stellen unelastisch sind.

5. Telefon-Anrufbeantworter nach einem der Ansprüche 1 bis 4, dadurch g e k e n n z e i c h n e t , daß die Bediener-

folien (7) Ausnehmungen (9) an der Stelle eines Lautsprechers und/oder eines Mikrophons (10) aufweisen.

6.  Telefon-Anrufbeantworter nach einem der Ansprüche 1 bis
    5, dadurch g e k e n n z e i c h n e t , daß die Be-
    dienerfolien (7) jeweils adhäsiv auf der Folientastatur
    (2) anhaften.

7.  Telefon-Anrufbeantworter nach einem der Ansprüche 1 bis
    6, dadurch g e k e n n z e i c h n e t , daß die Be-
    dienerfolie (7) auf beiden Seiten mit Tastenangaben
    versehen sind.

0158294

FIG.1

Uhr
Micro
Stunden + Lautstärke − Minuten
305 COMPUR
Ansage
Diktat
Geschwindigkeit + −
Rücklauf
Start Vorlauf
Stop
Aufnahme

FIG.4

Code speichern
1 Code drücken
2 Code eintippen (0-999)
3 Eingabe drücken

Code
Eingabe

0   1   2   3
    4   5   6
    7   8   9

FIG.5

Ansage aufsprechen
1 Ansage drücken
2 Aufnahme gedrückt halten
3 bei Aufleuchten der Sekundenanzeige sprechen
4 nach 10-50s Sprechzeit
   Aufnahme lösen
Bei mehreren Texten Bedienungsanleitung beachten
Ansage prüfen
1 Start drücken Lautstärke !

Ansage
+ Lautstärke −
Rücklauf
Start
Aufnahme

0158294

FIG. 2

FIG. 3

| | Uhr | 0 | 1 | 2 | 3 |
|---|---|---|---|---|---|
| 1 Uhr drucken | | : | 4 | 5 | 6 |
| 2 Zeit eintippen: z.B 17 45 | | | | | |
| 3 Eingabe drucken | Eingabe | 7 | 8 | 9 | |
| 4 Uhr drucken | | | | | |

4992 000 001                1

FIG. 6

| | Erdtaste | 0 | 1 | 2 | 3 |
|---|---|---|---|---|---|
| 1. Rufnummer drucken | | | | | |
| 2. Rufnummer u. ggf. Steuerzeichen eintippen: bei Rufnummer „0" ist die SC-Funktion gesperrt | Pause | Wählton | 4 | 5 | 6 |
| 3. Eingabe drucken | | | | | |
| Kontrolle der Rufnummer: | Rufnummer | Eingabe | 7 | 8 | 9 |
| 1. Rufnummer drucken: → Anzeige der Rufnummer | | | | | |
| 2. Eingabe drucken | | | | | |

4992 000 008                8

FIG. 7